# EUROPEAN PATENT APPLICATION

(11) **EP 3 176 732 A1**
(43) Date of publication of application: **07.06.2017**
(21) Application number: 15306915.8
(22) Date of filing: 02.12.2015
(51) Int. Cl.: G06K 9/46, G06F 17/30, G06T 1/00, G02B 27/00, G06F 21/60

(54) **METHOD FOR GENERATING A FINGERPRINT FOR A LIGHT FIELD IMAGE CAPTURE, COMPUTER READABLE STORAGE MEDIUM AND APPARATUS CONFIGURED TO GENERATE A FINGERPRINT FOR A LIGHT FIELD IMAGE CAPTURE**

(71) Applicant: Thomson Licensing, 92130 Issy-les-Moulineaux (FR)
(72) Inventor: Theis, Oliver, 32689 Kalletal (DE); Drazic, Valter, 35830 Betton (FR); Schubert, Arno, 35250 Chevaigne (FR)
(74) Representative: Huchet, Anne

(57) **Abstract**

A method for generating a fingerprint for a light field image capture, a computer readable medium and an apparatus (20, 30) configured to generate a fingerprint for a light field image capture. A light field image capture is received (10) via an input (21). A serializer (24) serializes (11) an array (*X*) of images representing the light field image capture to generate a sequence (*S*) of images. A hash generator (25) generates (12) hashes (*H*) for the images of the sequence (*S*) of images. These hashes (*H*) are then encoded (13) by a hash encoder (26).

## Description

### FIELD

The present solution relates to a method for generating a fingerprint for a light field image capture. Further, the solution relates to a computer readable storage medium having stored therein instructions enabling generating a fingerprint for a light field image capture. Furthermore, the solution relates to an apparatus configured to generate a fingerprint for a light field image capture.

### BACKGROUND

Light field image acquisition adds two dimensions to traditional 2D images by also capturing the direction of light hitting the sensor plane. One known solution for capturing light field images makes use of an array of conventional cameras. An example of such a camera array is described in [1]. Another known solution makes use of a specially designed single lens light field camera. An example of such a camera is described in [2].

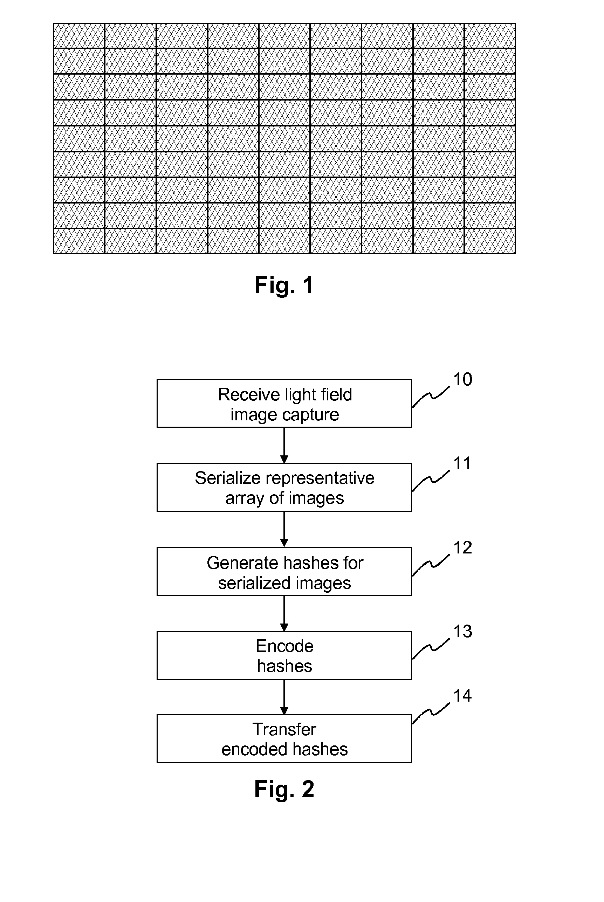

One well known representation of the 4D data array resulting from light field image acquisition is a 2D array of 2D arrays, as described in [3]. An example of such a 2D array of 2D arrays is shown in Fig. 1. While it has a direct physical representation within the camera array described in [1], it can likewise be generated from light field captures obtained with single lens light field cameras.

US 8,908,058 describes a system for storing light field images in a unified manner, which enforces immutability of source images. The immutability of frames is enforced by the use of a digest, or hash, which is a unique identifier that may be recomputed (invariantly) from the frame's contents at any time.

What is missing, however, is a solution for efficient generation and robust matching of digital fingerprints for light field image captures.

### SUMMARY

It would be desirable to provide a solution for generating a fingerprint for a light field image capture.

According to one aspect, a method for generating a fingerprint for a light field image capture comprises:
- receiving a light field image capture;
- serializing an array of images representing the light field image capture to generate a sequence of images;
- generating hashes for the images of the sequence of images; and
- encoding the hashes.

Similarly, a computer readable storage medium has stored therein instructions enabling generating a fingerprint for a light field image capture, wherein the instructions, when executed by a computer, cause the computer to:
- receive a light field image capture;
- serialize an array of images representing the light field image capture to generate a sequence of images;
- generate hashes for the images of the sequence of images; and
- encode the hashes.

Also, in one embodiment an apparatus configured to generate a fingerprint for a light field image capture comprises:
- an input configured to receive a light field image capture;
- a serializer configured to serialize an array of images representing the light field image capture to generate a sequence of images;
- a hash generator configured to generate hashes for the images of the sequence of images; and
- a hash encoder configured to encode the hashes.

In another embodiment, an apparatus configured to generate a fingerprint for a light field image capture comprises a processing device and a memory device having stored therein instructions, which, when executed by the processing device, cause the apparatus to:
- receive a light field image capture;
- serialize an array of images representing the light field image capture to generate a sequence of images;
- generate hashes for the images of the sequence of images; and
- encode the hashes.

The present solution allows efficiently generating digital fingerprints for light field image captures. A fingerprint for a light field image capture is generated through a three-step strategy. First the 2D image array representing the light field image capture is serialized. Then a hash is generated for the serialized images. Finally, the resulting series of hashes is encoded. Encoding the hashes may include compressing the hashes. The fingerprint obtained in this way is suitable for robust matching of light field image captures. It especially solves the problem of matching a rendered view of a certain perspective against light field image captures.

In one embodiment, the hash is a perceptual hash. For generating perceptual hashes features in the images are used to generate distinct fingerprints, which are comparable. Perceptual hashes are close to one another if the features are similar. As such perceptual hashes are useful for a number of applications, e.g. in image matching, image retrieval, or image indexing.

Advantageously, serializing the array of images representing the light field image capture uses a spiral or zigzag or serialization strategy. These strategies ensure that the resulting image sequence has minimized variations between neighboring images, which makes hash encoding more efficient.

In one embodiment, the array of images representing the light field image capture generated from a received light field image capture. Depending on the type of light field image capture, the desired 2D array of images representing the light field image capture is not readily available. In such cases it first needs to be generated from the light field image capture.

### BRIEF DESCRIPTION OF THE DRAWINGS

- Fig. 1: depicts a representation of a 4D data array resulting from light field image acquisition;
- Fig. 2: is a simplified flow chart illustrating a method for generating a fingerprint for a light field image capture;
- Fig. 3: shows a first example of a serialization strategy for serializing a 2D image array representing a light field image capture;
- Fig. 4: illustrates a second example of a serialization strategy for serializing a 2D image array representing a light field image capture;
- Fig. 5: schematically depicts a first embodiment of an apparatus configured to generate a fingerprint for a light field image capture; and
- Fig. 6: schematically shows a second embodiment of an apparatus configured to generate a fingerprint for a light field image capture.

### DETAILED DESCRIPTION OF PREFERRED EMBODIMENTS

For a better understanding the principles of embodiments of the invention shall now be explained in more detail in the following description with reference to the figures. It is understood that the invention is not limited to these exemplary embodiments and that specified features can also expediently be combined and/or modified without departing from the scope of the present invention as defined in the appended claims. In the drawings, the same or similar types of elements or respectively corresponding parts are provided with the same reference numbers in order to prevent the item from needing to be reintroduced.

Fig. 2 depicts a simplified flow chart illustrating a method for generating a fingerprint for a light field image capture. After receiving 10 a light field image capture, e.g. via an input or from a storage unit, an array ***X*** of images representing the light field image capture is serialized 11 to generate a sequence ***S*** of images. Then hashes ***H*** are generated 12 for the images of the sequence ***S*** of images. These hashes ***H*** are subsequently encoded 13. The encoded hashes ***H*** are then transferred, e.g. by outputting them via an output, storing them on a storage unit, or processing them for further applications.

According to the present principles a fingerprint for a light field image capture is generated through a three-step strategy. First the 2D image array representing the light field image capture is serialized 11, e.g. using a circular square spiral starting from the center or a zig-zag sampling scheme starting in one corner. In this way a sequence of images is generated. Then a perceptual hash is generated 12 for each image of the sequence. One possibility for generating such a perceptual hash is described in European Patent Application 14307077.9. Due to its hierarchical nature it is very well suited for the purpose of handling minor angle shifts. Finally, the series of perceptual hashes is encoded 13 and, where appropriate, compressed. General purpose encoding techniques may be applied during this step, e.g. gap-compression or variable-byte coding.

A raw light field image capture may be represented through a 2D array ***X*** of 2D images, that means by a 4D array of dimension (*j* × *k* × *m* × *n*), where *m* × *n* represents the size of each image and ***j*×*k*** the number of the different angle views. In the following, color information will not be handled, that means it is assumed that in case of RGB capture ***X*** is a representation of the image luminance.

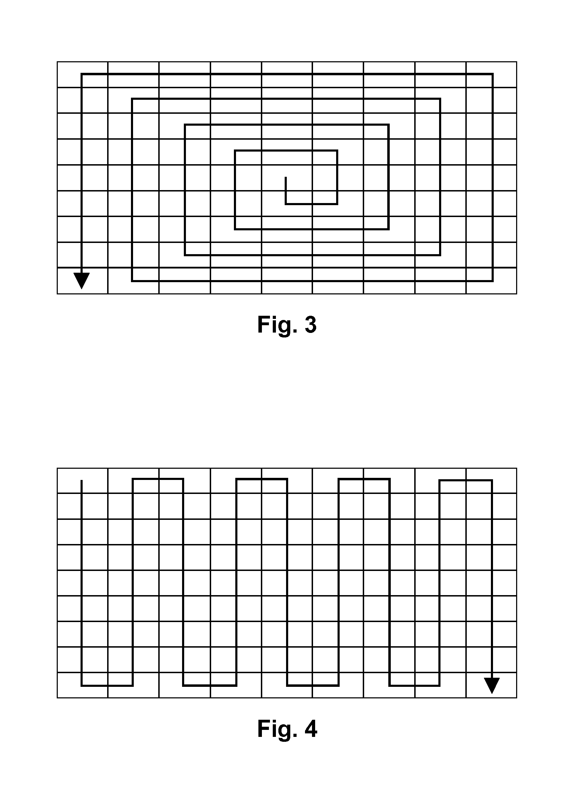

In order to make the hash encoding step 13 efficient, it is useful to generate an image sequence that minimizes variation between neighboring images. To this end, according to one solution, a square (or rectangular) spiral sampling pattern starting from the center is used to transform the 4D array ***X*** into a 3D array ***S*** of size **(*m*×*n*×*j·k*).** The direction of the spiral (clockwise or counterclockwise, inward or outward) and the location of the first view following the center view (left, right, up, down) can be chosen freely. One example of this serialization strategy is shown in Fig. 3 for the case of ***j = k =* 9.** The resulting order of the 81 views is as follows:

| | | | | | | | | |
|---|---|---|---|---|---|---|---|---|
| 73 | 72 | 71 | 70 | 69 | 68 | 67 | 66 | 65 |
| 74 | 43 | 42 | 41 | 40 | 39 | 38 | 37 | 64 |
| 75 | 44 | 21 | 20 | 19 | 18 | 17 | 36 | 63 |
| 76 | 45 | 22 | 7 | 6 | 5 | 16 | 35 | 62 |
| 77 | 46 | 23 | 8 | 1 | 4 | 15 | 34 | 61 |
| 78 | 47 | 24 | 9 | 2 | 3 | 14 | 33 | 60 |
| 79 | 48 | 25 | 10 | 11 | 12 | 13 | 32 | 59 |
| 80 | 49 | 26 | 27 | 28 | 29 | 30 | 31 | 58 |
| 80 | 50 | 51 | 52 | 53 | 54 | 55 | 56 | 57 |

According to another solution a zig-zag sampling scheme starting in one corner is used. The starting corner (top-left, top-right, bottom-left, bottom-right) and the initial scanning direction (horizontal, vertical) can be chosen freely. One example of this serialization strategy is shown in Fig. 4 for the case of ***j = k =* 9.** The resulting order of the 81 views is as follows:

| | | | | | | | | |
|---|---|---|---|---|---|---|---|---|
| 1 | 18 | 19 | 36 | 37 | 54 | 55 | 72 | 73 |
| 2 | 17 | 20 | 35 | 38 | 53 | 56 | 71 | 74 |
| 3 | 16 | 21 | 34 | 39 | 52 | 57 | 70 | 75 |
| 4 | 15 | 22 | 33 | 40 | 51 | 58 | 69 | 76 |
| 5 | 14 | 23 | 32 | 41 | 50 | 59 | 68 | 77 |
| 6 | 13 | 24 | 31 | 42 | 49 | 60 | 67 | 78 |
| 7 | 12 | 25 | 30 | 43 | 48 | 61 | 66 | 79 |
| 8 | 11 | 26 | 29 | 44 | 47 | 62 | 65 | 80 |
| 9 | 10 | 27 | 28 | 45 | 46 | 63 | 64 | 81 |

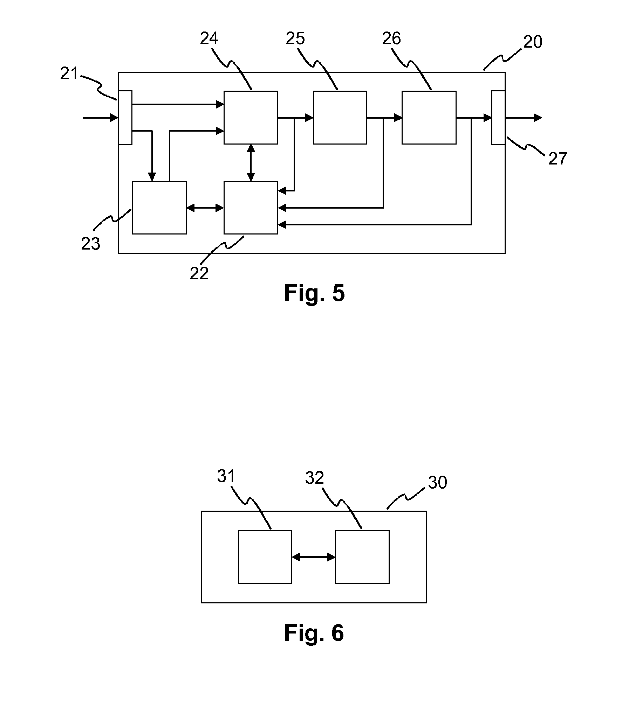

Fig. 5 shows a simplified schematic illustration of an apparatus 20 configured to generate a fingerprint for a light field image capture. The apparatus 20 has a serializer 24 for serializing 11 the 2D image array ***X*** representing a light field image capture, which is received 10 from a light field camera, a network or an external storage system via an input 21, or from a local storage unit 22. The 2D image array may likewise be received 10 from an image processor 23 of the apparatus 20, which generates the 2D image array from a raw light field capture. The serializer 24 outputs a sequence of images, i.e. a 3D array ***S*,** to a hash generator 25, which generates 12 a perceptual hash ***H*** for each image of the 3D array S. A hash encoder 26 then encodes 13 the series of perceptual hashes. Encoding 13 may include compressing the series of perceptual hashes. The encoding results ***E*** are preferably made available via an output 27. Also the 3D array ***S*** or the perceptual hashes ***H*** may be made available via the output 27. They may also be stored on the local storage unit 22, processed for being rendered on a display connected to the apparatus 20, or processed for being transmitted to further processing units. The output 27 may also be combined with the input 21 into a single bidirectional interface. Each of the different units 23, 24, 25, 26 can be embodied as a different processor. Of course, the different units 23, 24, 25, 26 may likewise be fully or partially combined into a single unit or implemented as software running on a suitable processor.

In Fig. 6, there is another apparatus 30 configured to generate a fingerprint for a light field image capture. The apparatus 30 comprises a processing device 31 and a memory device 32. The apparatus 30 is for example a computer or workstation. The memory device 31 has stored therein instructions, which, when executed by the processing device 32, cause the apparatus 30 to perform steps according to one of the described methods.

For example, the processing device 32 can be a processor adapted to perform the steps according to one of the described methods. In an embodiment said adaptation comprises that the processor is configured, e.g. programmed, to perform steps according to one of the described methods.

A processor as used herein may include one or more processing units, such as microprocessors, digital signal processors, or combination thereof.

The local storage unit 22 and the memory device 31 may include volatile and/or non-volatile memory regions and storage devices such as hard disk drives, DVD drives. A part of the memory is a non-transitory program storage device readable by the processing device 32, tangibly embodying a program of instructions executable by the processing device 32 to perform program steps as described herein according to the principles of the invention.

### CITATIONS

[1] Wilburn et al.: "High Performance Imaging Using Large Camera Arrays", ACM Transactions on Graphics, Vol 24 (2005), pp. 765-776.
[2] Ng et al.: "Light field photography with a hand-held plenoptic camera", Computer Science Technical Report CSTR, 2005.
[3] Georgiev et al.: "Computational Methods for Radiance", http://www.tgeorgiev.net/EG10/Computation.

## Claims

1. A method for generating a fingerprint for a light field image capture, the method **comprising:**
- receiving (10) a light field image capture;
- serializing (11) an array (***X***) of images representing the light field image capture to generate a sequence (***S***) of images;
- generating (12) hashes (***H***) for the images of the sequence (S) of images; and
- encoding (13) the hashes (***H***).

2. The method according to claim 1, **wherein** the hash is a perceptual hash.

3. The method according to claim 1, **wherein** encoding (13) the hashes (***H***) comprises compressing the hashes (***H***).

4. The method according to one of the preceding claims, **wherein** serializing (11) the array (***X***) of images representing the light field image capture uses a spiral or zigzag or serialization strategy.

5. The method according to one of the preceding claims, **further** comprising generating the array (***X***) of images representing the light field image capture from a received light field image capture.

6. The method according to one of the preceding claims, **further** comprising at least one of providing the encoded hashes to an output, storing the encoded hashes, and processing the encoded hashes for rendering on a display or for being transmitted to further processing.

7. A computer readable storage medium having stored therein instructions enabling generating a fingerprint for a light field image capture, wherein the instructions, when executed by a computer, cause the computer to:
- receive (10) a light field image capture;
- serialize (11) an array (***X***) of images representing the light field image capture to generate a sequence (***S***) of images;
- generate (12) hashes (***H***) for the images of the sequence (***S***) of images; and
- encode (13) the hashes (***H***).

8. An apparatus (20) configured to generate a fingerprint for a light field image capture, the apparatus (20) **comprising:**
- an input (21) configured to receive (10) a light field image capture;
- a serializer (24) configured to serialize (11) an array (***X***) of images representing the light field image capture to generate a sequence (***S***) of images;
- a hash generator (25) configured to generate (12) hashes (***H***) for the images of the sequence (***S***) of images; and
- a hash encoder (26) configured to encode (13) the hashes (***H***).

9. An apparatus (30) configured to generate a fingerprint for a light field image capture, the apparatus (30) comprising a processing device (31) and a memory device (32) having stored therein instructions, which, when executed by the processing device (32), cause the apparatus (30) to:
- receive (10) a light field image capture;
- serialize (11) an array (***X***) of images representing the light field image capture to generate a sequence (***S***) of images;
- generate (12) hashes (***H***) for the images of the sequence (S) of images; and
- encode (13) the hashes (***H***).
